# EUROPEAN PATENT APPLICATION

(11) **EP 1 296 012 A2**
(43) Date of publication of application: **26.03.2003**
(21) Application number: 02256591.5
(22) Date of filing: 23.09.2002
(51) Int. Cl.: E05F 11/38, B60J 1/17

(54) **Motor vehicle door module**

(30) Priority: 21.09.2001 US 960111
(71) Applicant: Hi-Lex Corporation, Battle Creek, MI 49015 (US)
(72) Inventor: Garcia, Jose Maria, Troy, Michigan 48084 (US); Reid, Dennis G., Rochester, Michigan 48306 (US); Topolewski, Michael Paul, Troy, Michigan 48098 (US)
(74) Representative: Szczuka, Jan Tymoteusz

(57) **Abstract**

The present invention provides an improved window regulator module 18 for a motor vehicle and an improved methodology for installation thereof. The window regulator module 18 includes a base plate 20 having a rear edge configured to define a generally vertical channel structure 20i for receipt of a carrier member 24 for receipt of the lower edge portion 38a of the window glass 38. The base plate 20 further includes a series of threaded fastener receiving devices 20u, 20v at spaced locations around its periphery. To install the module 18 in the vehicle door 10, the module 18 is passed through an access opening 14a in the inner panel 14 of the door 10 to position the module 18 in the space 16 between the inner and outer door panels 14, 12, the module is pulled back toward the inner door panel 14 to position unthreaded holes 14b in the inner door panel 14 in proximity to and in general alignment with the thread receiving devices 20u, 20v in the base plate 20, and threaded fasteners 33 are passed through the unthreaded holes 14b in the inner door panel 14 for threaded engagement with the respective thread receiving devices 20u, 20v in the base plate 20. The module 18 further carries the inside door handle assembly 30, the latch mechanism 31, and the outside door handle assembly 80b.

## Description

### BACKGROUND OF THE INVENTION

This invention relates to motor vehicle doors and, more particularly, to motor vehicle doors incorporating a window regulator module.

Vehicle doors generally comprise a hollow structural unit or shell that is constituted by an inner sheet metal door panel and an outer sheet metal panel that are mated together and secured to each other along a mating periphery. In the past, the vehicle door was then completed by adding several parts to this hollow structural shell, more or less individually, to form the window regulator and associated sub assemblies.

In recent years, vehicle doors have evolved to a modular construction where several door parts are preassembled into a module that is then assembled to the hollow structural shell as a preassembled module rather than a number of individual parts, the purpose of the modular construction being to facilitate assembly and reduce assembly costs. In particular, the recent trend has seen the provision of the window regulator assembly as a separate module for insertion into the sheet metal door shell.

Whereas the provision of the window regulator assembly in separate modular form has in general had the desired result of facilitating assembly and reducing assembly costs, there is an ongoing desire to reduce the cost of manufacture of the module as well as the overall cost of installing the module in the door shell.

### SUMMARY OF THE INVENTION

The invention relates generally to a window regulator module for use with a motor vehicle door having an outer panel, an inner panel, and a window glass adapted to be moved between a raised position and a lowered position between the inner and outer panels, the module comprising a base plate and a window regulator mechanism including a front vertical channel structure proximate the front edge of the plate, a rear vertical channel structure proximate a rear edge of the plate, carrier members slidably received in the channel structures and adapted to support a lower edge portion of the window glass, and drive means for sliding the carrier member vertically in the channel structures whereby to move the window glass between its raised and lowered positions.

According to the invention, one of the channel structures is formed as an integral portion of the base plate. This specific construction significantly reduces the cost of manufacturing the module providing the window regulator assembly.

According to a further feature of the invention, the one channel structure is formed along a vertical side edge of the base plate. This specific construction further reduces the cost of manufacturing the window regulator module.

According to a further feature of the invention, the integral portion of the base plate forming the one channel structure has an arcuate configuration in vertical cross section and the other channel structure comprises a separate channel member fixedly attached at upper and lower ends thereof to the base plate and having an arcuate configuration corresponding to the arcuate configuration of the integral base plate portion. This specific channel construction allows the window regulator module to accommodate the modern day curvilinear path of movement of the window glass.

According to a further feature of the invention, an access opening is provided in a door panel sized to pass the window regulator module; a plurality of unthreaded holes are provided in the inner door panel at circumferentially spaced locations around the access opening; and a plurality of thread receiving means are provided in the module base plate at circumferentially spaced locations around the periphery of the base plate corresponding locationally to the circumferentially spaced holes in the inner panel. With this arrangement, the module may be installed in the door by passing the module through the access opening to position the base plate in the space between the inner and the outer door panels, pulling the module back toward the inner door panel to position the unthreaded holes in the inner door panel in proximity to and in general alignment with the respective thread receiving means on the base plate, and passing threaded fasteners through the unthreaded holes for threaded engagement with the respective thread receiving means. This specific construction and methodology relieves the motor vehicle manufacturer of the need to provide threaded devices or constructions to allow the installation of the window regulator module on the vehicle door, thereby minimizing the extent of preparation required by the vehicle manufacturer to accept the module and thereby optimizing the desirability of utilizing the module from the motor vehicle manufacturers standpoint.

The invention further provides an improved method of installing an outside door handle assembly on a motor vehicle door, the door including inner and outer panels defining a space therebetween, the outside door handle assembly comprising a mounting plate member for attachment to the outer panel of the door, an actuator member carried by the mounting plate member, and an outside door handle for mounting on the base member and operative when so mounted to operate the actuator member. According to the invention methodology, a window regulator module is provided comprising a base plate and a window regulator mechanism mounted on the base plate and operative when actuated to raise and lower a door window glass; an inside door handle assembly is mounted on the base plate; one end of a first actuating link member is secured to the inside door handle assembly; a first actuator member of a door latch mechanism is secured to another end of the first actuating link member; one end of a second actuating link member is secured to a second actuator member of the door latch mechanism; the actuator member carried by the mounting plate member is connected to another end of the second actuating link member; the base plate of the window regulator module is mounted on the inner door panel to position the window regulator mechanism in the space between the inner and outer door panels where it may operate to raise and lower the door window glass; the latch mechanism is mounted on a latch face of the door; the mounting plate member together with the actuator member carried thereby is mounted on the outer panel of the door; and the outside door handle is mounted on the mounting plate member. This methodology provides a simple and effective means of installing the outer door handle assembly on the motor vehicle door.

Other applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:
Fig. 1 is a perspective view of a motor vehicle door according to the present invention;

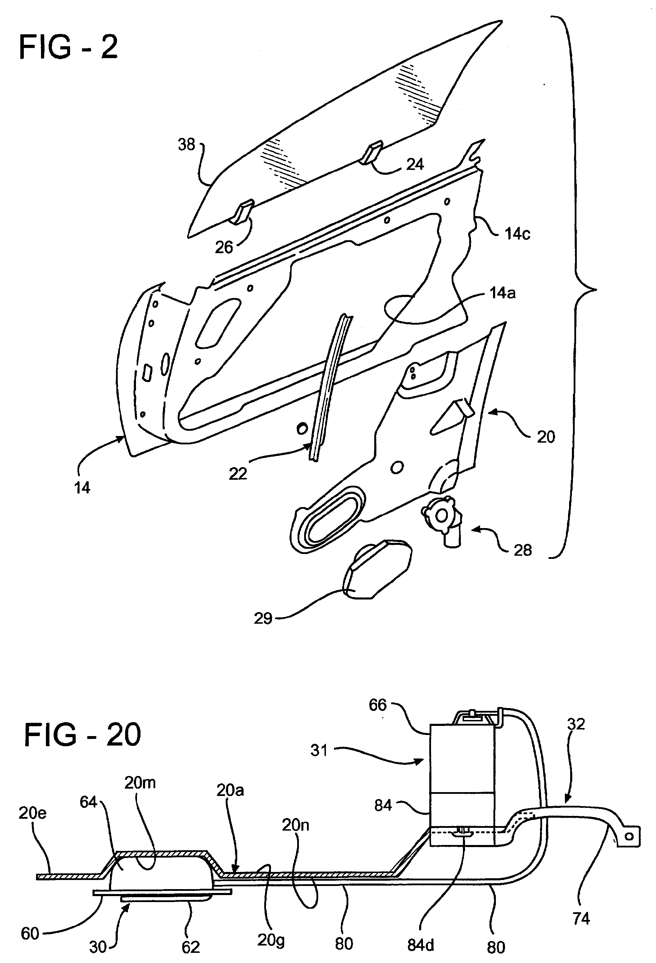

Fig. 2 is a perspective exploded view of a window regulator module according to the invention shown in association with an inner panel of the motor vehicle door;

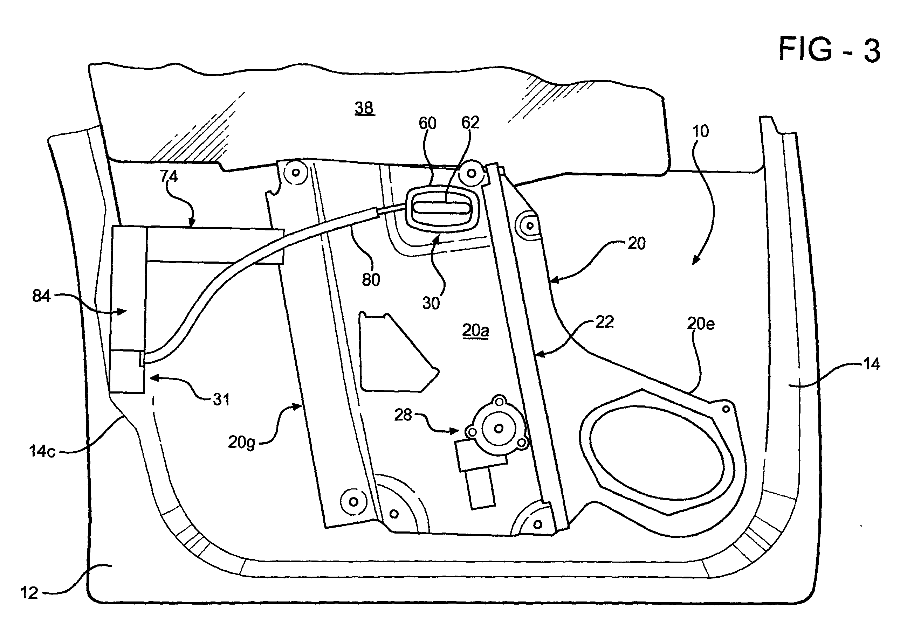

Fig. 3 is a perspective view showing the window regulator module installed in the door;
Fig. 4 is an elevational view of the window regulator module;
Figs. 5 and 6 are detail views showing the operation of carrier members employed in the window regulator module;
Fig. 7 is a somewhat schematic side elevational view of the window regulator module;
Figs. 8 and 9 are perspective views of a base plate employed in the window regulator module;

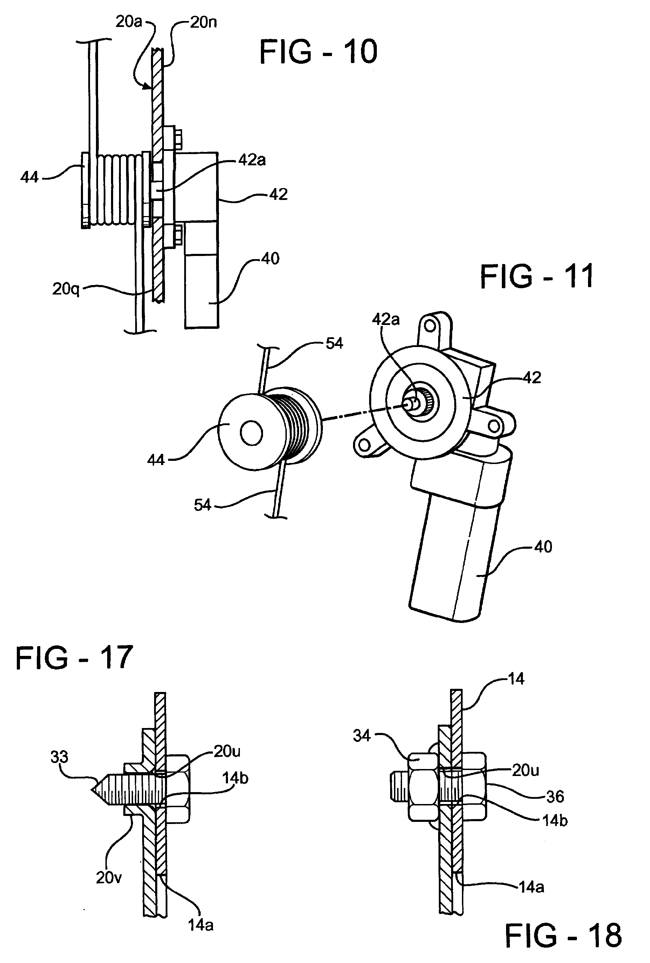

Figs. 10 and 11 are views of a motor and spool assembly employed in the window regulator module;
Figs. 12-16 are successive views showing the installation of the window regulator module in the vehicle door;
Figs. 17 and 18 are detail views taken within the circle 17/18 in Fig. 16 and showing thread constructions to facilitate the installation of the window regulator module in the vehicle door;
Fig. 19 is a perspective view of an inside door handle assembly, latch mechanism, and outside door handle subassembly forming a part of the window regulator module; and
Fig. 20 is a somewhat schematic view showing the shipping configuration of the window regulator module.

### DETAILED DESCRIPTION OF THE PREFERRED EMBODIMENT

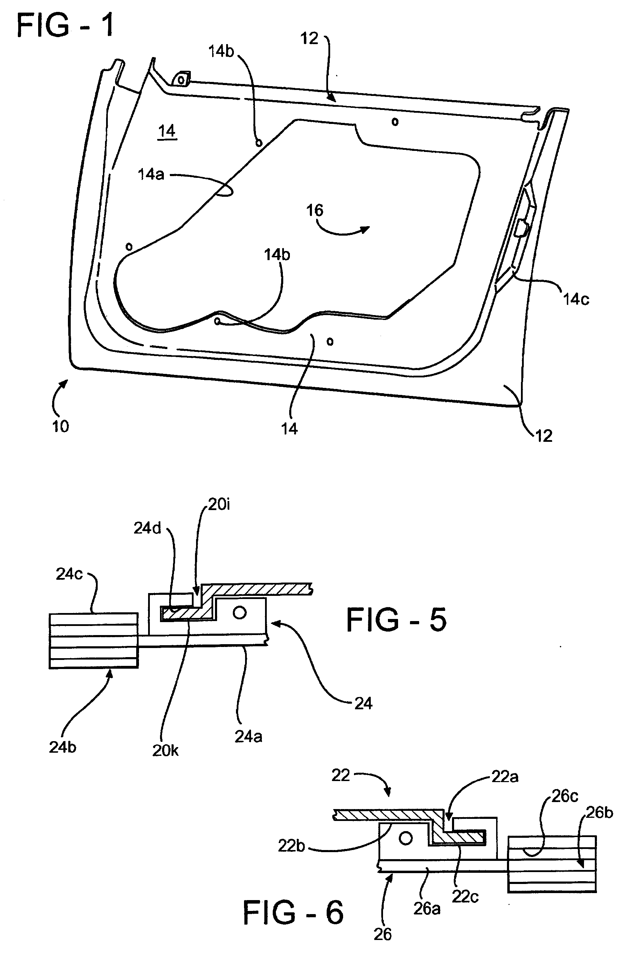

The window regulator module of the invention is utilized in association with a motor vehicle door 10 seen in Fig. 1. Door 10 includes an outer panel or skin 12 and an inner panel or skin 14 suitably secured together along peripheral seam lines to form a space 16 therebetween. The inner and outer door panels may be formed of sheet metal and may be secured together in a welding operation. An access opening 14a is formed in the inner panel to facilitate the installation of the window regulator module 18 of the invention and a plurality of unthreaded holes 14b are provided in the inner door panel at circumferentially spaced locations around access opening 14a.

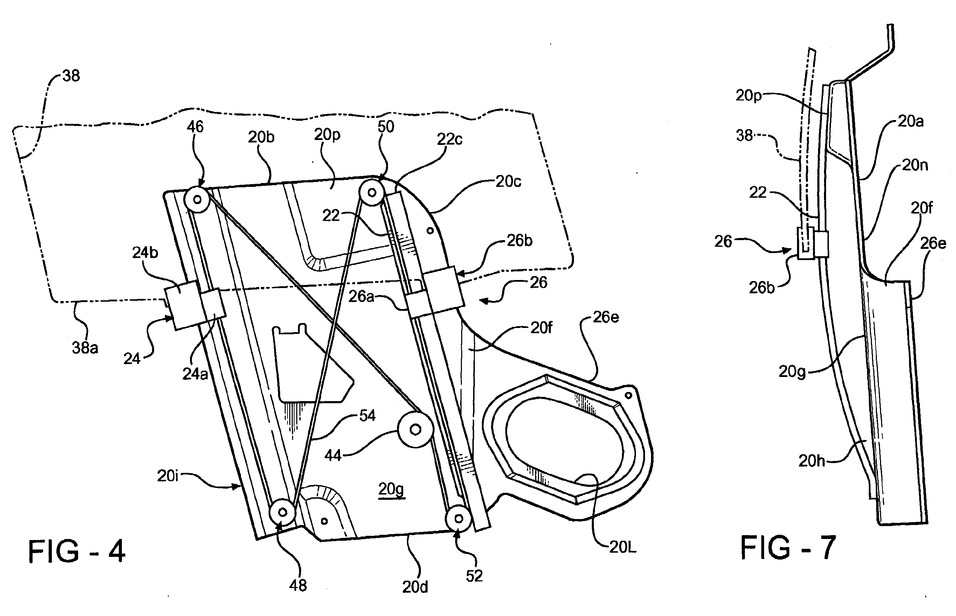

Window regulator module 18 (Figs. 4-9 and 19) includes a base plate 20, a channel member 22, carrier members 24, 26, a drive mechanism 28, an audio speaker 29, an inside door handle assembly 30, a latch mechanism 31, and an outside door handle subassembly 32.

Base plate 20 is formed of a suitable sheet metal material, has a generally planar configuration, and has an overall configuration generally corresponding to the configuration of access opening 14a. Plate 20 includes a planar main body portion 20a defining an upper edge 20b, a forward edge 20c and a lower edge 20d; a forward speaker extension portion 20e separated from planar main body portion 20a by a shoulder 20f; and a rearward portion 20g separated from planar main body portion 20a by a shoulder 20h. Rear portion 20g has an arcuate or curvilinear configuration as opposed to the planar configuration of main body portion 20a and an arcuate channel structure 20i is formed along the rear edge of arcuate portion 20g. Channel structure 20i is defined by a shoulder portion 20j and a lip or flange portion 20k.

Forward extension 20e includes an opening 201 to facilitate the mounting of the speaker 30. A recess 20m is defined on the inboard face 20n of the plate proximate the upper edge 20b of the plate and this recess appears as a platform structure 20p on the outboard face 20q of the plate. A central aperture 20r is provided in main body portion 20a and a platform structure 20s is defined on the inboard face 20n of the plate proximate the lower edge 20d of the plate and this platform structure appears as a recess 20t in the outboard face 20q of the plate.

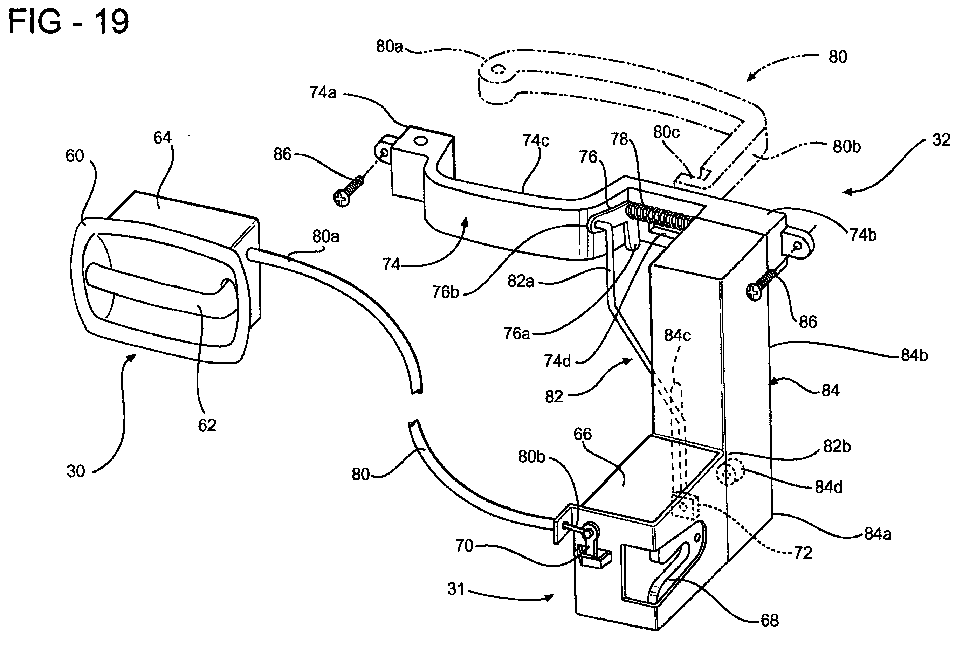

A plurality of circumferentially spaced mounting holes 20u are provided at spaced locations around the periphery of the base plate. Each mounting hole 20u may be defined (Fig. 17) by a pierced conical extrusion 20v sized to accept a Type CA tapping screw 33 or, alternatively (Fig. 18), a weld nut 34 may be secured to the outboard face of the base plate in surrounding relation to the mounting hole 20u to accept a standard bolt 36.

Channel member 22 may be formed as a stamped metallic member and has an arcuate configuration corresponding to the arcuate configuration of channel structure 20i. Channel member 22 defines a channel structure 22i generally corresponding to the channel structure 20i formed at the rearward edge of the base plate. Channel structure 22 is defined by a shoulder 22b and a lip or flange 22c. The upper end 22d of channel member 22 is welded to platform 20p and the lower end 22e of the channel member is welded to the outboard face 20q of the base plate proximate lower edge 20d and proximate shoulder 20f.

Carrier member 24 (Figs. 4 and 5) is slidably mounted on channel structure 20i and includes a slide portion 24a slidably engaging the channel structure and a carrier portion 24b secured to slide portion 24a and having an upwardly opening U configuration defining a saddle 24c to receive the lower edge 38a of the window glass 38 of the door assembly. The slide portion 24a of carrier 24 will be seen to be configured to define a slot 24d to guide and slidably receive the flange 20k of channel structure 20i.

Carrier member 26 (Figs. 4 and 6) is a mirror image of carrier member 24 and is designed for coaction with channel member 22. Specifically, carrier member 26 includes a slide portion 26a sliding on the channel structure 22i and a carrier portion 26b defining a saddle 26c for receipt of the lower edge 38a of the window glass.

Drive mechanism 28 includes an electric motor 40, a speed reducer 42, a drum 44, pulleys 48, 50, 52, and a cable 54.

Motor 40 and speed reducer 42 are formed as a unitary casing structure and are mounted on the inboard face 20n of the main body portion 20a of the base plate with the output shaft 42a of the speed reducer projecting through central aperture 20r.

Drum 44 is positioned on the outboard face 20q of base plate 20 in driving engagement with speed reducer output shaft 42a.

Pulleys 46 and 48 are mounted on the outboard face of the base plate on upper and lower portions of arcuate base plate portion 20g in proximity to upper edge 20b and lower edge 20d respectively; pulley 50 is mounted on platform 20d proximate upper edge 20b and proximate the upper end of channel member 22; and pulley 52 is mounted on the outboard face 20q of the base plate proximate lower edge 20d and in proximity to the lower end of channel member 22.

Cable 54 is wound around drum 44, is trained successively around pulleys 46, 48, 50 and 52, and is suitably secured to the slide portions 24a, 26a of carrier members 24 and 26 whereby actuation of motor 40 operates via speed reducer 40, drum 44, and cable 54 to move carriers 24 and 26 in unison either upwardly or downwardly to thereby raise or lower the window glass 38. Although not shown, it will be understood that cable 54 is of the Bowden type and includes protective sheathing to protect and guide the operating core of the cable.

Speaker 29 is of known form and, as previously mentioned, is fixedly mounted in opening 201 defined by base plate forward extension 20e.

Inside door handle assembly 30 (Figs. 19 and 20) includes a mounting plate 60, a handle 62 pivotally mounted on the mounting plate, and a base mechanism 64.

Latch mechanism 31 is of known form and includes a housing 66, a latch member 68 pivotally mounted in the housing and arranged for coaction in known manner with a striker pin mounted on an associated face of the vehicle door opening, a first actuator member 70 controlling the latch member 68, and a second actuator member 72 separately controlling the latch member 68.

Outside door handle subassembly 32 includes a mounting plate member 74 including a socket portion 74a at one end thereof, a key cylinder mounting portion 74b at another end thereof, and a saddle shaped main body portion 74c intermediate the ends. Assembly 32 further includes an actuator member 76 having a bell crank configuration and mounted on a shaft 78 carried by the mounting plate member 74. It will be understood that mounting plate member 74 and actuator member 76 are intended for coaction with an outside door handle 80 with a pivot end 80a of the handle received in socket portion 74a and a handle arm portion 80b at the other end of the handle extending through an aperture 74d in mounting plate member 74 for driving engagement via a notch 80c with an arm 76a of bell crank actuator 76 whereby pivotal movement of the handle about pivot end 80a has the effect of pivoting bell crank 76 about the axis of pin 78.

The base mechanism 64 of inside door handle assembly 30 is connected to one end 80a of a flexible cable 80 with the other end 80b of the cable secured to first latch actuator member 70. Cable 80 in known manner may be of the Bowden type including an outer sheath and an inner core.

An actuating link 82 is mounted at one end 82a on the free end of the other arm 76b of bell crank actuator 76 and the other end 82b of the link is connected to second latch actuator member 72.

A connector housing 84 of box-like configuration is secured at a lower end 84a thereof to a face of latch housing 66 and is secured at an upper end 84b thereof to the key cylinder mounting portion 74b of mounting plate member 74. Housing 84 will be seen to extend between and interconnect the outside door handle subassembly and the latch mechanism and includes a slot 84c in one wall thereof passing link 82.

### PACKAGING AND SHIPPING

Prior to shipping to the original equipment manufacturer, and as best seen in Fig. 20, inside door handle assembly 30 is suitably positioned and secured in recess 20m on the base plate 20 and a snap-fitting 84d provided on a rear wall 84e of housing 84 is passed through a suitable opening 20w in base plate rearward portion 20g with cable 80 extending from the inside door handle assembly 30 along the inboard face 20n of the base plate and around flange 20k and with outside door handle mounting plate member 74 extending rearwardly from the base plate. It will be seen that a 180° rotation of latch assembly 31 from the disposition seen in Fig. 19 will be necessary to enable the latch mechanism to be positioned against the outboard face 20q of the base plate as seen in Fig. 20.

### INSTALLATION

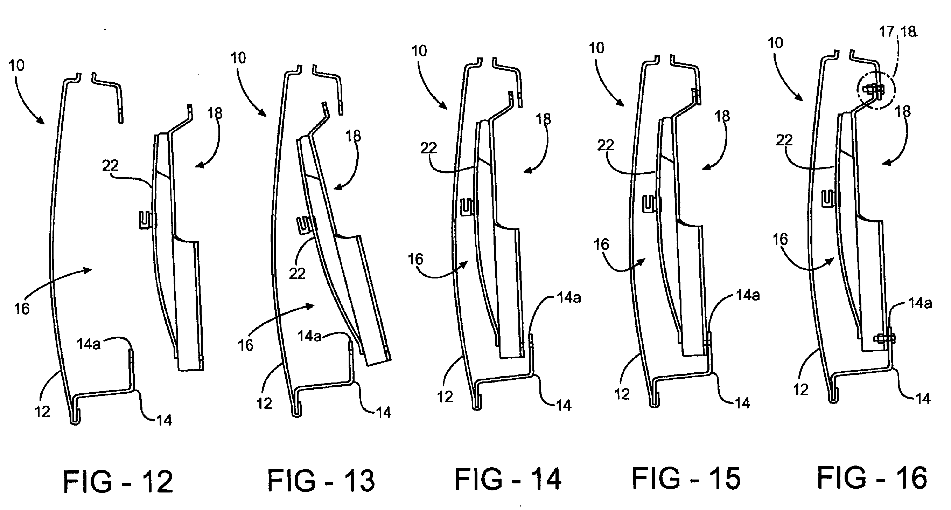

The installation of the window regulator module 18 in the door 10 by the original equipment manufacturer following receipt from the module manufacturer is seen progressively and schematically in Figs. 12-16.

As seen in Fig. 12, following formation of the door 10 but prior to installation of the interior trim panel (not shown), module 18 (shown for simplicity without inside door handle assembly 30, latch mechanism 31, and outside door handle subassembly 32) is positioned in proximity to access opening 14a whereafter (Fig. 13), the module is tilted to pass the module through the opening 14a and position the module (Fig. 14) in the space 16 whereafter the module is pulled back toward the inner door panel to position respective mounting holes 20u on the base plate 20 in alignment with the mounting holes 14b in the inner panel 14 (Fig. 15) whereafter (Fig. 16) threaded fasteners are passed through the unthreaded holes 14b in the inner panel 14 for threaded engagement either with a pierced conical extrusion 20v or with a weld nut 34. As previously noted, in the case of the use of the pierced conical extrusions, Type CA tapping screws 33 are employed to self tap the extrusions as the screws pass through the extrusions and in the case of the use of the weld nuts 34 standard bolts 36 may be employed. Following mounting of the base plate on the door inner panel 14 the snap-fitting 84d is suitably released from the base plate whereafter the latch mechanism is installed in the latch housing portion 14c of inner door panel 14 and mounting plate member 74 is suitably secured to the outer door panel 12 (utilizing the fasteners 86) in proximity to a door opening previously provided in the door panel whereafter outside door handle 80 may be mounted on the mounting plate member for coaction with bell crank 76 in known manner to control latch mechanism 31 in response to pivotal movement of the door handle. The motor vehicle door has now been provided, in a simple installation procedure, with operative inside and outside door handle assemblies and an operative window regulator mechanism.

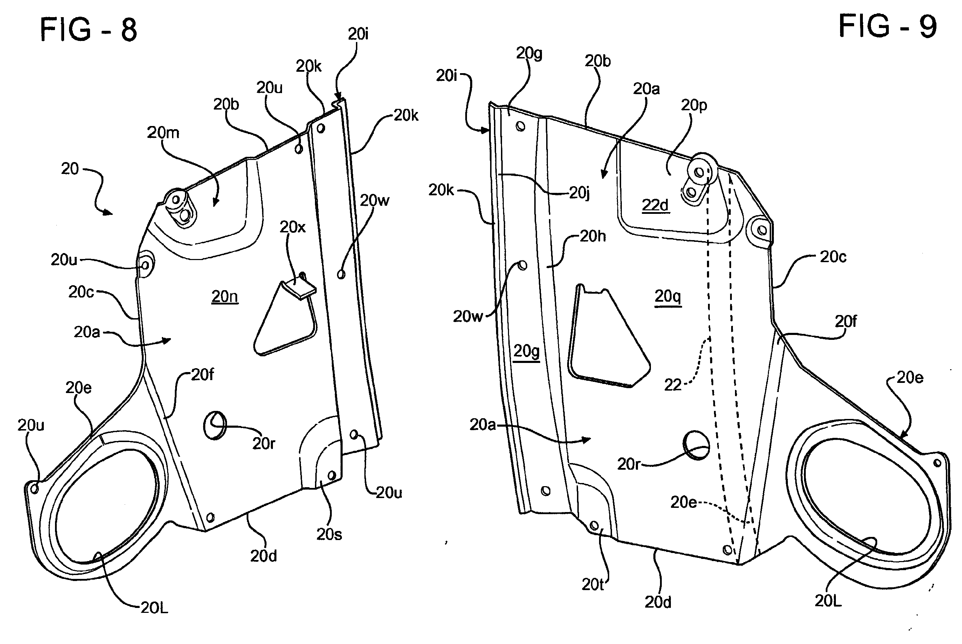

Following the installation of the window regulator module in the door, a trim panel (not shown) is positioned over the inner door panel 14 to complete the fabrication of the door. The trim panel would of course include an opening for speaker 29 and an opening for access to inside door handle assembly 30, and the trim panel may include an armrest which may be supported by a bracket 20x (Fig. 8) struck from plate main body portion 20a.

The invention will be seen to provide a window regulator module structure and methodology that decreases the manufacturing cost of the window regulator module and also facilitates the installation of the window regulator module in the door. Specifically, the formation of the rear channel structure as an integral structure along the rear edge of the base plate of the module eliminates the need for a separate rear channel member and the installation of the module against the outboard face of the inner panel of the door allows the base plate of the module to carry the thread mechanisms for coaction with the threaded fasteners whereby to eliminate the need for the motor vehicle manufacturer to make special provision in the door itself for threaded attachment of the window regulator module. Further, the window regulator module, in a simple composite assembly and in a simple installation methodology, provides the motor vehicle door assembly with operative inside and outside door handle assemblies and an operative window regulator mechanism.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A window regulator module (18) for use with a motor vehicle door (10) having an outer panel (12), an inner panel (14), and a window glass (38) adapted to be moved between a raised position and a lowered position between the inner (14) and outer (12) panels, the module comprising a base plate (20) and a window regulator mechanism including a front vertical channel structure (22i) proximate a front edge of the plate (20c), a rear vertical channel structure (22i) proximate a rear edge of the plate, carrier members (24, 26) slidably received in the channel structures (20i, 22i) and adapted to support a lower edge portion (38a) of the window glass (38), and drive means (28) for sliding the carrier members (24, 26) vertically in the channel structures (20i, 22i) whereby to move the window glass (38) between its raised and lowered positions, **characterized in that**:
one of the channel structures is formed as an integral portion of the base plate (20).

2. A window regulator module (18) according to claim 1 wherein said one channel structure (20i) is formed along a vertical side edge of the base plate (20).

3. A window regulator module (18) according to claim 1 or claim 2 wherein:
the integral portion of the base plate forming said one channel structure (20g) has an arcuate configuration in vertical cross section.

4. A window regulator module (18) according to claim 3 wherein:
the other channel structure (22i) comprises a separate channel member (22) fixedly attached at upper (22d) and
lower (22e) ends thereof to the base plate (20) and having an arcuate configuration corresponding to the arcuate configuration of the integral base plate portion (20g).

5. A window regulator module (18) according to claim 4 wherein the channel structure defined by the integral base plate portion (20i) comprises the rear channel structure and the channel structure (22i) defined by the separate channel member (22) comprises the front channel structure.

6. A window regulator module (18) according to any one of claims 1 to 5 wherein the base plate (20) includes threaded fastener member (33) engaging portions (20u, 20v) at locations spaced around the periphery of the base plate.

7. A motor vehicle door assembly comprising a door (10) having an outer panel (12) and an inner panel (14) defining a space (16) therebetween and a door module (18) comprising a base plate (20) and a window regulator mechanism mounted on the base plate (20) and adapted to receive a lower edge portion (38a) of a window glass (38), **characterized in that**:
an access opening (14a) is provided in the inner door panel (14) sized to pass the module (18);
a plurality of unthreaded holes (14b) are provided in the inner door panel (14) at circumferentially spaced locations around the access opening (14a); and
a plurality of thread receiving means (20u, 20v) are provided in the module base plate (20) at circumferentially spaced locations around the periphery of the base plate (20) corresponding locationally to the circumferentially spaced holes in the inner panel (14b),
whereby the module (18) may be installed in the door (10) by passing the module (18) through the access opening (14a) to position the base plate (20) in the space (16) between the inner (14) and outer (12) door panels, pulling the module (18) back toward the inner door panel (14) to position the unthreaded holes (14b) in the inner door panel (14) in proximity to and in general alignment with the respective thread receiving means (20u, 20v) on the base plate (20), and passing threaded fasteners (33) through the unthreaded holes (14b) for threaded engagement with the respective thread receiving means (20u, 20v).

8. A motor vehicle door assembly according to claim 7 wherein the window regulator mechanism includes spaced generally vertical channel structures (20i, 22i) and carrier members (24, 26) slidably mounted on the channel structures (20i, 22i) and adapted to receive the lower edge portion (38a) of the window glass (38); and one of the channel structures (20i) is formed as an integral portion of the base plate (20).

9. A motor vehicle door assembly according to claim 8 wherein said one channel structure (20i) is formed along a vertical side edge of the base plate (20).

10. A motor vehicle door assembly according to claim 8 or claim 9 wherein the integral portion of the base plate forming the one channel structure (20g) has an arcuate configuration in vertical cross section.

11. A motor vehicle door assembly according to claim 10 wherein the other channel structure (22i) comprises a separate channel member (22) fixedly attached at upper (22d) and lower (22e) ends thereof to the base plate (20) and having an arcuate configuration corresponding to the arcuate configuration of the integral base plate portion (20g).

12. A motor vehicle door assembly according to any one of claims 9 to 11 wherein the channel structure defined by the integral base plate portion (20i) comprises a rear channel structure and the channel structure (22i) defined by the separate channel member (22) comprises a front channel structure.

13. A base plate (20) for use as a foundation member of a window regulator module (18) adapted for securement to an inner door panel (14) of a motor vehicle door (10) to provide a window regulator mechanism for the door (10) operative to raise and lower the window glass (38) of the door (10), **characterized in that**:
the base plate (20) comprises a generally planar sheet member having a generally straight, generally vertical side edge configured to define a channel structure (20i) for sliding receipt of a carrier member (24) adapted to receive the lower edge portion of the window glass (38a).

14. A base plate (20) according to claim 13 wherein the base plate (20) includes means (20u, 20v) at spaced locations around the periphery of the base plate operative to threadably receive threaded fastener members (33).

15. A method of mounting a window regulator module (18) in a door (10) structure of a motor vehicle, the door structure including inner (14) and outer (12) door panels defining a space (16) therebetween, the window regulator module (18) comprising a base plate (20) and a window regulator assembly mounted on the base plate (20) and adapted to receive a lower portion (38a) of a window glass (38), the method comprising:
providing an access opening (14a) in the inner door panel (14) sized to pass the module (18);
passing the module (18) through the access opening (14a) to position the module (18) in the space (16) between the inner (14) and outer (12) door panels;
pulling the module back toward the inner door panel (14) to position surface portions of the base plate spaced about the periphery of the base plate in juxtaposition to surface portions of the inner door panel located in surrounding relation to the inner door panel access opening; and
securing the base plate (20) to the inner door panel (14) at the juxtaposed surface portions.

16. A method according to claim 15 wherein the step of securing the base plate (20) to the inner door panel (14) comprises securing the juxtaposed surface portions together utilizing fastener members (33).

17. A method according to claim 16 wherein said securing is effected by using threaded fastener members (33) and passing said threaded fastener members (33) through unthreaded holes (14b) in the inner door panel (14) for threaded engagement with threaded fastener member engaging portions (20u, 20v) provided in the base plate (20) proximate the surface portions of the base plate.

18. A method of installing an outside door handle assembly (32) on a motor vehicle door (10), the door (10) including inner (14) and outer (12) panels defining a space (16) therebetween, the outside door handle assembly (32) comprising a mounting plate member (74) for attachment to the outer panel (12) of the door, an actuator member (76) carried by the mounting plate member (74), and an outside door handle (80) for mounting on the base member and operative when so mounted to operate the actuator member (76), the method comprising:
providing a window regulator module (18) comprising a base plate (20) and a window regulator mechanism mounted on the base plate (20) and operative when actuated to raise and lower a door window glass (38);
mounting an inside door handle assembly (30) on the base plate (20);
securing one end of a first actuating link member (80a) to the inside door handle assembly (30);
securing a first actuator member (70) of a door latch mechanism (31) to another end of the first actuating link member (80a);
securing one end of a second actuating link member (82b) to a second actuator member of the door latch mechanism (72); connecting the actuator member (76) carried by the mounting plate member (74) to another end of the second actuating link member (82a);
mounting the base plate (20) of the window regulator module (18) on the inner door panel (14) to position the window regulator mechanism (18) in the space (16) between the inner (14) and outer (12) door panels where it may operate to raise and lower the door window glass (38);
mounting the latch mechanism (31) on a latch face of the door (10);
mounting the mounting plate member (74) together with the actuator member (76) carried thereby on the outer panel (12) of the door (10); and
mounting the outside door handle (80) on the mounting plate member (74).

19. A method according to claim 18 and including the further steps of:
prior to mounting the window regulator base plate (20) on the inner door panel (14), securing the door latch mechanism (31) to the window regulator base plate (20); and
after mounting of the window regulator base plate (20) on the inner door panel (14), detaching the latch mechanism (31) from the window regulator base plate (20) to enable the latch mechanism (31) to be mounted on the latch face of the door.

20. A window regulator module (18) for use with a motor vehicle door (10) having inner (14) and outer (12) panels defining a space (16) therebetween and a window glass (38) adapted to be moved between a raised position and a lowered position between the inner (14) and outer (12) panels, the module comprising:
a base plate (20);
a window regulator mechanism mounted on the base plate (20) and operative when actuated to raise and lower the window glass (38);
an inside door handle assembly (30) mounted on the base plate (20);
a latch mechanism (31) adapted for mounting on a latch face of the door and having first and second actuator members (70, 72) for selectively actuating the latch mechanism (31) ;
a mounting plate member (74) adapted for mounting on the outer door panel (12) and adapted to receive an outside door handle member (80b);
an outside door handle actuator member (76) mounted on the mounting plate member (74);
a first actuating link member (80) secured at one end (80a) thereof to the inside door handle assembly (30) and at another end (80b) thereof to the first door latch actuator member (70); and
a second actuating link member (82) secured at one end (82b) thereof to the second door latch actuator member (72) and at another end (82a) thereof to the outside door handle actuator member (76),
whereby the base plate (20) of the window regulator module (18) may be mounted on the inner door panel (14) to position the window regulator mechanism in the space (16) between the inner (14) and outer (12) door panels where it may operate to raise and lower the door window glass (38), the latch mechanism (31) may be mounted on the latch face of the door, the mounting plate member (74) together with the actuator member (76) carried thereby may be mounted on the outer panel (12) of the door, and the outside door handle member (80b) may be mounted on the mounting plate member (74) to provide a motor vehicle door assembly having operative inside (30) and outside (32) door handle assemblies and an operative window regulator mechanism.

21. A window regulator module (18) according to claim 20 wherein the module (18) further includes means for releasibly securing the latch mechanism (31) to the window regulator base plate (20), whereby the latch mechanism (31) may be secured to the window regulator base plate (20) for shipping purposes and thereafter, during installation of the module (18) in the door (10), released from the window regulator base plate (20) for mounting on the latch face of the door.
